# EUROPÄISCHE PATENTANMELDUNG

(11) **EP 0 895 896 A1**
(43) Veröffentlichungstag der Anmeldung: **10.02.1999**
(21) Anmeldenummer: 97113522.3
(22) Anmeldetag: 06.08.1997
(51) Int. Cl.: B60P 7/00, B60P 7/08

(54) **Transportsicherung für eine Vielfalt von Fällen**

(71) Anmelder: Strittmatter, Peter, 88046 Friedrichshafen (DE)
(72) Erfinder: Strittmatter, Peter, 88045 Fridrichshafen (DE); Kluge, Carsten, 88677 Markdorf (DE)

(57) **Zusammenfassung**

Die Erfindung betrifft eine variable Transport- und Verrutschsicherung für PKWs, Kombis, LKWs, Schiffe, Bahnwaggons, Flugzeuge und Transporter, welche die beim Transport von Gütern unterschiedlichen Abmessungen, Formen, Geometrien und Gewichte der Ladung berücksichtigt. Der Erfindung schafft für eine Vielzahl von Fällen eine Transportsicherung.

Diese Aufgabe wird durch entsprechende Einlegeböden bzw. -decken gelöst, die im 100 mm-Raster (je nach Bedarf Rastergröße >/< 100 mm) mit Löchern (Durchmesser etwa 12 - 20 mm) versehen sind, in die im Bedarfsfall verschiedene Stopper-, Stoppergeometrien, Trennwände und Regalsysteme eingesteckt werden können.

## Beschreibung

Die Erfindung betrifft eine variable Transport- und Verrutschsicherung für PKWs, Kombis, LKWs und Transporter. Bisherige Systeme lassen in vielen Bereichen eine Transportsicherung nur begrenzt zu in Form von Verzurrgurten, Unterlegkeilen oder Anti-Rutsch-Matten. Dies ist auch darin begründet, daß bei Transporten von Gütern die Abmessung, das Gewicht, die Form und die Geometrie der Ladung oft unterschiedlich ist. Dies hat wiederum den Nachteil, daß man für solche Fälle den unterschiedlichsten Arten der Transportsicherung wie oben bereits genannt anbringen muß.

Der Erfindung liegt daher die Aufgabe zugrunde, eine Transportsicherung für eine Vielzahl von Fällen zu schaffen.

Erfindungsgemäß wird die genannte Aufgabe durch entsprechende Einlegeböden gelöst, die im 100 mm-Raster (je nach Bedarf Rastergröße >/< 100 mm) mit Löchern versehen wird, in die im Bedarfsfall verschiedene Stopper- und Stoppergeometrien eingesteckt werden können. Der Einlegeboden ist ansonsten auf der Oberfläche glatt, so daß die Ware leicht in die gewünschte Position geschoben werden kann. Je nach Größe der zu sichernden Transportfläche können die Einlegeböden einteilig oder mehrteilig sein. Wenn die Ladung in die Position gebracht wurde, wird diese durch die entsprechenden Stopper bzw. Stoppergeometrien am Verrutschen gehindert. Die für die Einlegeböden verwendeten Materialien können aus unterschiedlichen Materialien wie z.B. Kunststoff, Metall, Holz oder aus einer Kombination derselben bestehen. Die Stoppergrößen können variiert beziehungsweise eingestellt werden, so daß die Absicherung der zu sichernden Ladung optimal gewährleistet ist (siehe Zeichnung).

Der Erfindung liegt weiterhin zugrunde, daß durch die Verwendung einer vom Lochbild und der Fahrzeuggeometrie angepaßten Platte im Dachhimmelbereich bei z. B. Transportern die Möglichkeit darin besteht, mit Aluminium bzw. anderen Verstrebungen ein variables Regalsystem im Steckformat in die Ladefläche zu integrieren, welches sich in wenigen Minuten ein- bzw. ausbauen läßt.

Diese Variante würde auch zur Sicherung von hohen, sperrigen Bauteilen zum Einsatz kommen, um ein Umkippen der Ladung zu verhindern.

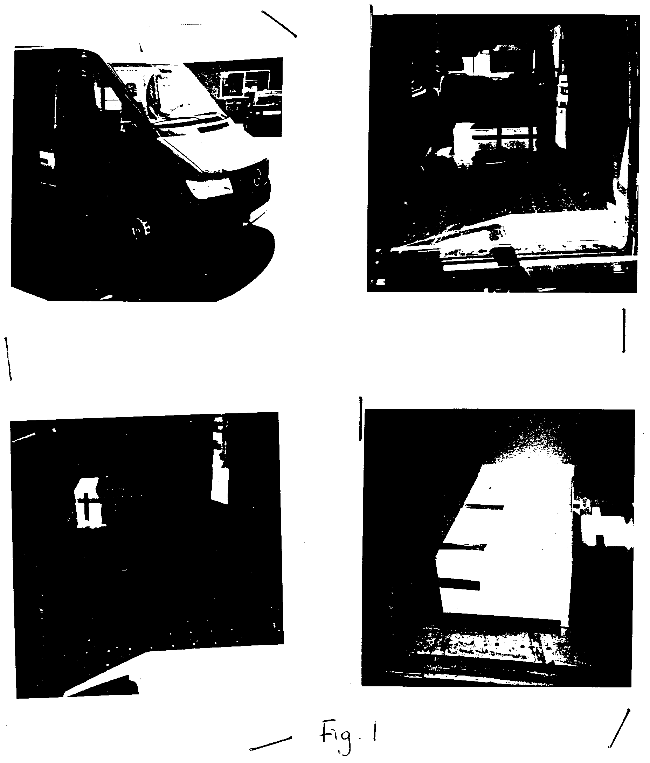

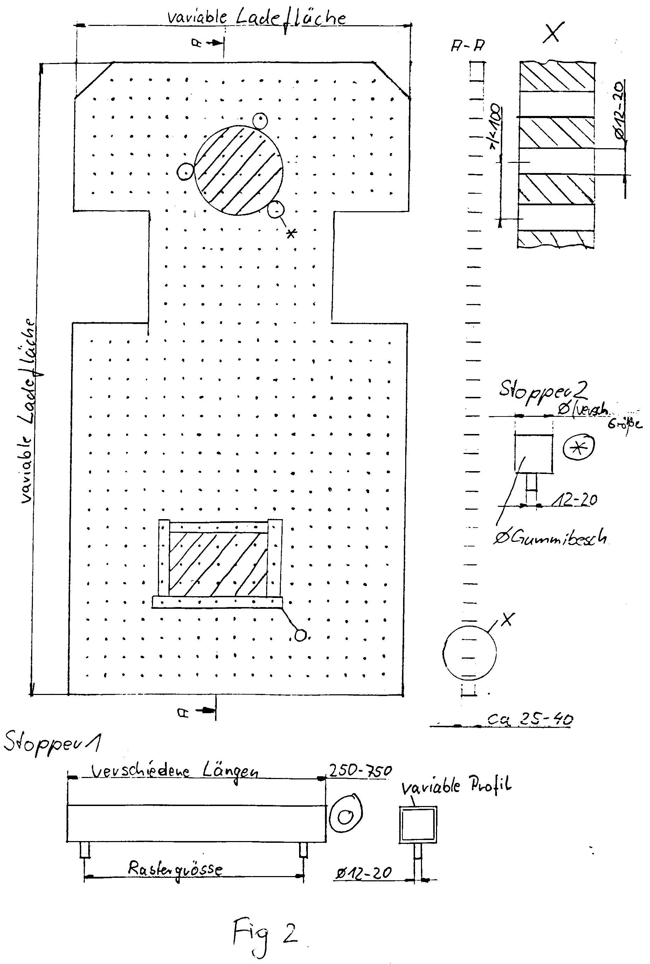

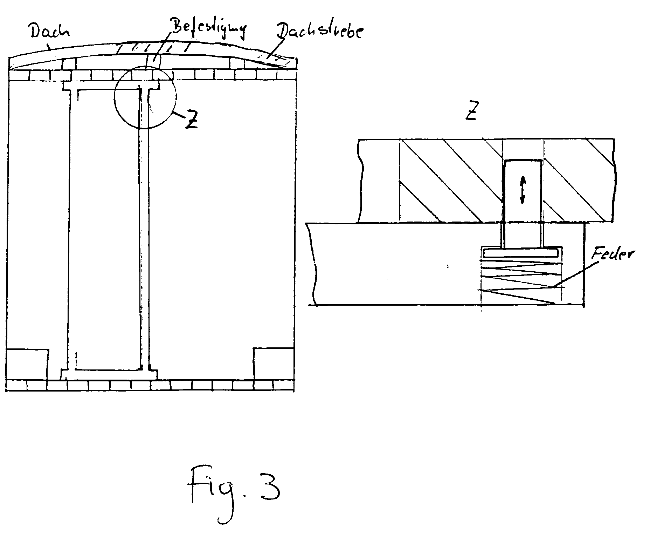

## Patentansprüche

1. Eine variable Transport- und Verrutschsicherung mit im Bedarfsfall nutzbaren Schnellsteckregalsystem, dadurch gekennzeichnet, daß die Grund- und Deckenplatten im 100 mm-Raster (bzw. größer oder kleiner) mit Löchern und Buchsen versehen sind, in die sich verschiedene Arten von Stoppern in unterschiedlichen Formen und Geometrien (auch verstellbar) einstecken lassen und somit die Ladung jeglicher Art vor Verrutschen und Kippen zu sichern.
